# EUROPÄISCHE PATENTANMELDUNG

(11) **EP 1 477 328 A2**
(43) Veröffentlichungstag der Anmeldung: **17.11.2004**
(21) Anmeldenummer: 04010638.7
(22) Anmeldetag: 05.05.2004
(51) Int. Cl.: B60B 27/00

(54) **Vorrichtung zur Lagerung eines gelenkten Fahrzeugrades**

(30) Priorität: 14.05.2003 DE 10321594
(71) Anmelder: MAN Nutzfahrzeuge Aktiengesellschaft, 80976 München (DE)
(72) Erfinder: Simon, Bernhard, 85435 Erding (DE)

(57) **Zusammenfassung**

Eine Vorrichtung zur Lagerung eines gelenkten Fahrzeugrades mit
- einem am Fahrzeugaufbau um eine Lenkachse lenkbaren Radträger 1;
- einem am Radträger 1 befestigten und ein Rollenlager 2, 3, 4 aufweisenden Radlager 5;
- einem Radflansch 6 zum Befestigen des Fahrzeugrades, welcher mit dem Radlager 5 um eine Radachse 9 des Fahrzeugrades drehbar am Radträger 1 gelagert ist;
- einem Außenring 4 des Radlagers 5, welcher drehfest mit dem lenkbaren Radträger 1 verbunden ist;
- einem Achszapfen 10, welcher mittels des Rollenlagers 2, 3, 4 drehbar im Außenring 4 des Radlagers 5 gelagert ist; wobei
- am Achszapfen 10 eine Befestigung 11 vorgesehen ist, an welchem die Radnabe 6 und eine Bremsscheibe 15 mittels Schraubenverbindungen 12 befestigbar sind.

## Beschreibung

Die Erfindung betrifft eine Vorrichtung zur Lagerung eines gelenkten Fahrzeugrades nach dem Oberbegriff des Patentanspruches 1.

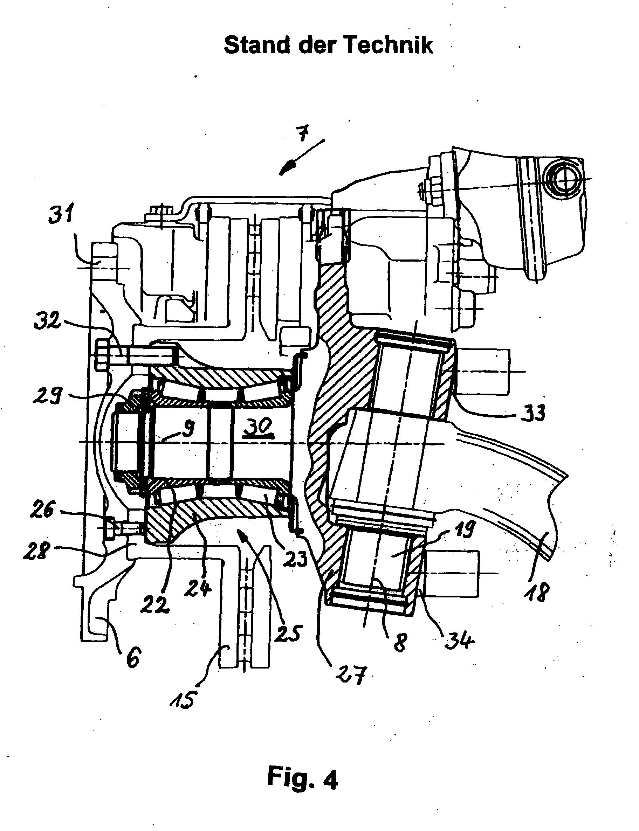

Eine derartige Vorrichtung, welche bei herkömmlichen Nutzfahrzeugen zum Einsatz kommt, ist in der Fig. 4 dargestellt. Diese Vorrichtung besitzt einen am Achskörper 18 lenkbar gelagerten Radträger 27. An dem Achskörper 18, welcher am Ende einen Achsschenkelbolzen 19 aufweist, ist der Radträger 27 gelagert. Um Achse 8 des Achsschenkelbolzens 19 ist der Radträger 27 in bekannter Weise durch die Lenkbewegungen am Lenkrad des Fahrzeugs schwenkbar angebracht und somit ist das Fahrzeug lenkbar. Am schwenkbaren Radträger 27 ist einstückig ein Achszapfen 30 vorgesehen. Der Achszapfen 30 liegt im Innenraum eines Rollenlagers, welches von einem Innenring 22, Lagerrollen 23 und einem Außenring 24 gebildet wird. Der Außenring ist drehbar über die Lagerrollen 23 am Achszapfen 30 und den Innenring 22 gelagert. Hierdurch wird ein Radlager 25 gebildet. Mit dem Außenring 24 des Rollenlagers bzw. Radlagers 25 ist durch Schraubenverbindungen 32 eine Radnabe 6 drehfest verbunden. An der Radnabe 6 sind Bohrungen 31 vorgesehen, durch welche durch nicht näher dargestellte Schraubenverbindungen das Fahrzeugrad an der Radnabe 6 befestigt wird. Hierdurch ist das Kraftfahrzeugrad drehbar um eine Radachse 9 am Fahrzeug gelagert. Durch eine auf ein Gewinde des Achszapfens 30 aufgeschraubte Sicherungsmutter 29 erfolgt eine axiale Sicherung des Radlagers 25 am Achszapfen 30.

Eine Bremsscheibe 15 ist mit einem Befestigungsring 28 ausgestattet, welcher zwischen dem Außenring 24 und der Radnabe 6 liegend mittels Schraubenverbindungen 32 drehfest mit der Radnabe 6 verbunden ist.

Die Schraubverbindung 26 dient der Vormontage von Radnabe 6 und Bremsscheibe 15.

Bei dieser bekannten Vorrichtung ist es erforderlich, dass der Radträger 27 und der einstückig angeformte Achszapfen 30 geschmiedet sind und insbesondere als Stahl-Schmiedeteile ausgebildet sind.

Aus der DE 101 21 862 A1 ist es bekannt, den Achszapfen und die Radnabe als Drehkörper auszugestalten, wobei der Achszapfen in den Hohlraum des am Radlager vorgesehenen Rollenlagers ragt und mit dem Innenring des Rollenlagers drehfest verbunden ist. Die bekannte Radlageranordnung ist jedoch an einem nicht gelenkten Fahrzeugrad vorgesehen, wobei der Außenring des Radlagers mit dem stumpfen Ende des Achsrohres fest verbunden ist.

Aufgabe der Erfindung ist es, eine Vorrichtung der eingangs genannten Art zu schaffen, bei welcher ein verringerter Fertigungsaufwand und verringertes Gewicht erreicht wird.

Diese Aufgabe wird erfindungsgemäß durch die kennzeichnenden Merkmale des Patentanspruches 1 gelöst.

Die Unteransprüche beinhalten vorteilhafte Weiterbildungen der Erfindung.

Bei der Erfindung ist der Achszapfen vom lenkbaren Radträger getrennt und drehbar im innenliegenden Hohlraum des Radlagers gelagert. Der Außenring des Radlagers weist einen Flansch mit Gewindebohrungen auf, womit der genannte Außenring mittels Schraubverbindungen mit dem lenkbaren Radträger verbunden ist.

Am drehbaren Achszapfen befindet sich ein Befestigungsflansch, an welchem die Radnabe und die Bremsscheibe mittels Schraubenverbindungen befestigt werden kann.

Der Achszapfen hat in seinem größeren Durchmesserbereich die Form eines Topfes mit einem nach außen weisenden Rand. Der Außendurchmesser der Topfform dient der zentrierenden Aufnahme der Bremsscheibe und der Radnabe an deren inneren Flanschen.

Der Rand der Topfform des Achszapfens ist ein Flansch mit Gewindebohrungen. An diesem Flansch werden die Radnabe an ihrem inneren Flansch und die Bremsscheibe gemeinsam angeschraubt.

Der Innendurchmesser der genannten Topfform des Achszapfens ist so bemessen, dass er mit Abstand den Außendurchmesser des stehenden Außenringes des Radlagers umgreift.

In vorteilhafter Weise kann der lenkbare Radträger aus einem Gussteil bestehen. Hieraus resultiert ein verringerter Fertigungsaufwand bei der Herstellung des lenkbaren Radträgers und man erreicht eine Gewichtseinsparung am lenkbaren Radträger. Ferner kann der Achszapfen teilweise hohl ausgebildet sein. Dadurch erreicht man eine Gewichtseinsparung am Radlager.

Weiterhin ermöglicht die dargestellte Anordnung eine erleichterte Montage, da das Radlager, der Achszapfen mit dem Befestigungsflansch für die Radnabe und die Bremsscheibe, als vormontierte Baueinheit am lenkbaren Radträger, vorzugsweise mittels Schraubverbindungen, montiert werden kann.

Am Befestigungsflansch des drehbaren Achszapfens ist im dargestellten Beispiel die Radnabe und die Bremsscheibe befestigt. Hierbei können mit denselben Schraubverbindungen sowohl die Radnabe als auch die Bremsscheibe am Befestigungsflansch des drehbaren Achszapfens befestigt werden.

Die beschriebene Vorrichtung kommt vorzugsweise bei gelenkten Rädern an der Vorderachse eines Nutzfahrzeugs zum Einsatz.

Die beigefügten Figuren dienen zur weiteren Erläuterung der Erfindung.

Es zeigt:
- Fig. 1: im Längsschnitt ein Ausführungsbeispiel der Erfindung;
- Fig. 2: in perspektivischer Ansicht von innen das in Fig. 1 dargestellte Ausführungsbeispiel;
- Fig. 3: in perspektivischer Ansicht von außen das in den Fig. 1 und 2 dargestellte Ausführungsbeispiel; und
- Fig. 4: eine bekannte Ausführungsform einer Vorrichtung zur Lagerung eines gelenkten Fahrzeugrades.

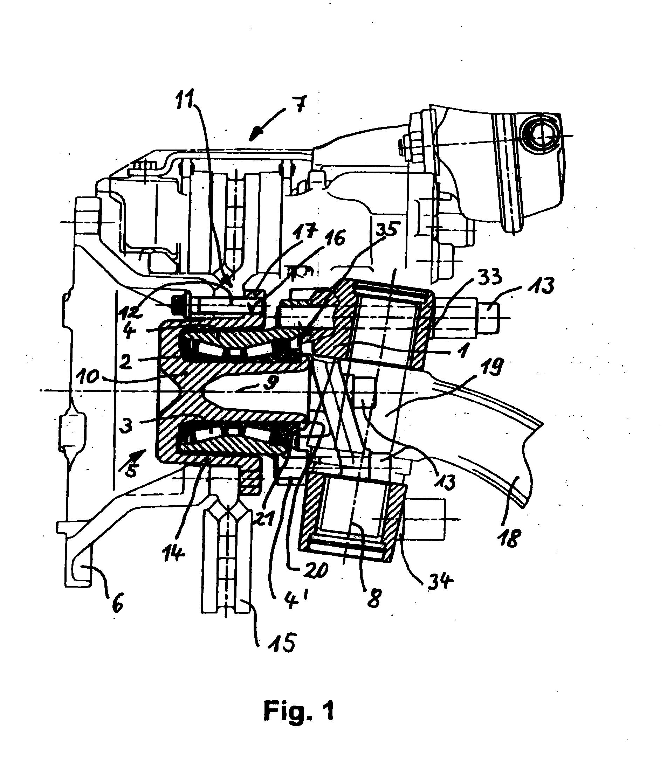

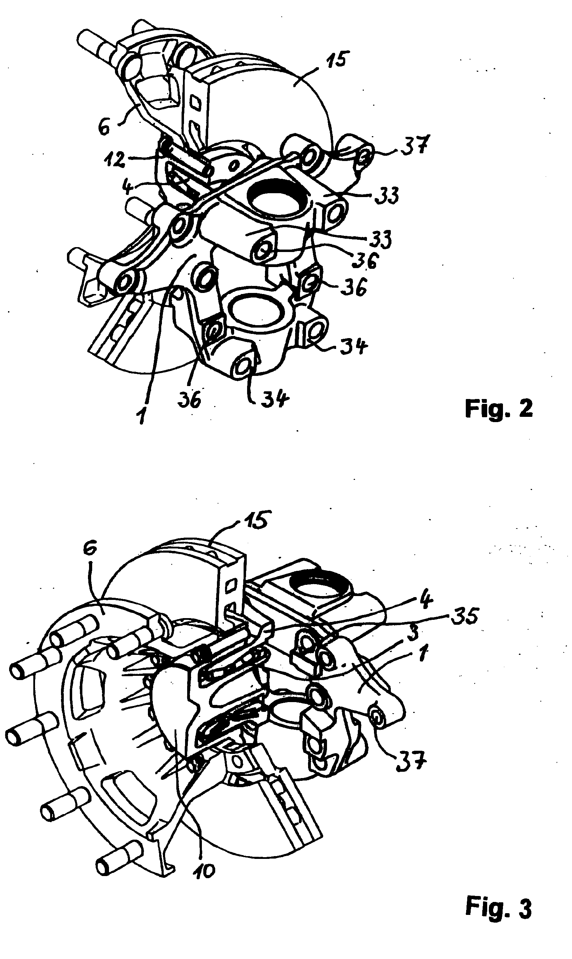

Das in den Fig. 1 bis 3 dargestellte Ausführungsbeispiel der Erfindung besitzt einen am Fahrzeugaufbau um eine Lenkachse 8 lenkbaren Radträger 1. Die Lenkachse 8 wird von einem Achsschenkelbolzen 19 gebildet, an welchem der Radträger 1 schwenkbar gelagert ist. Der Achsschenkelbolzen 19 ist am Ende eines Achskörpers 18 befestigt.

Lenkbewegungen werden von einem nicht näher dargestellten Lenkhebel, der an den Befestigungsstellen 33 am Radträger 1 angeschraubt ist, übertragen. Über einen nicht näher dargestellten Spurhebel, welcher an den Befestigungsstellen 34 am Radträger 1 angeschraubt ist, werden die Lenkbewegungen auf das andere lenkbare Rad übertragen.

Beim dargestellten Ausführungsbeispiel bildet ein Radlager 5 eine vormontierbare Baueinheit, welche am lenkbaren Radträger 1 mit Schraubenverbindungen 13 befestigbar ist. Hierzu sind am Radträger 1 Durchgangsbohrungen 36 vorgesehen. Die beiden oben liegenden Befestigungsaugen 33 mit Durchgangsbohrungen 36 dienen gleichzeitig zur Befestigung des Lenkhebels.

Das Radlager 5 besitzt einen Außenring 4, welcher einen Flansch mit Gewindebohrungen 4' hat, womit mit den vorgesehenen Schraubenverbindungen 13 der Außenring drehfest mit dem Radträger 1 verschraubt ist. Durch am Radträger 1 vorgesehene Zentriermittel 35 in Form von Passungen 35, wird eine Zentrierung des Radlagers 5 am Radträger 1 erzielt. Die Zentriermittel 35 mit der Verschraubung in der genannten Form sind so ausgebildet, dass sie die Achskräfte aufnehmen können.

Der Außenring 4 bildet in vorteilhafter Weise, wie beim Ausführungsbeispiel dargestellt ist, den Außenring eines Rollenlagers. Das Rollenlager beinhaltet ferner in bekannter Weise einen Innenring 2, wobei zwischen dem Innenring 2 und dem Außenring 4 Lagerrollen 3 in bekannter Weise angeordnet sind.

In dem Innenring 2 ist der Achszapfen 10 gelagert. Der Achszapfen 10 ist durch die Lagerrollen 3 drehbar gegenüber dem feststehenden Außenring 4 gelagert. Der Achszapfen 10 ist in vorteilhafter Weise teilweise hohl ausgebildet, um Gewicht einzusparen. An den Achszapfen 10 ist ein Zylinderteil 14 einstückig angeformt, welches den Außenring 4 im Abstand außen umfasst. Bei dem dargestellten Ausführungsbeispiel befindet sich somit das Rollenlager im Zwischenraum zwischen dem Achszapfen 10 und dem Zylinderteil 14. Am Zylinderteil 14 ist am innenliegenden Ende ein radial abstehender Befestigungsflansch 17, der Gewinde 16 aufweist, angeordnet. Durch Schraubenverbindungen 12 werden an diesem Befestigungsflansch eine Radnabe 6 und eine Bremsscheibe 15 befestigt. Das Zylinderteil 14 mit dem angeformten Befestigungsflansch 17 bildet somit eine Befestigungsanordnung, die einstückig als Achszapfen 10 ausgebildet ist.

In axialer Richtung der Radachse 9 ist der drehbar gelagerte Achszapfen 10 durch eine Bördelung 20 am innen liegenden Zapfenende gesichert. Hierzu ist ein Distanzring 21 erforderlich. Diese axiale Sicherung kann auch anderweitig, beispielsweise durch eine aufgeschraubte Sicherungsmutter oder Schraube erreicht werden.

Die Bauteile Achszapfen 10, Radlager 5, Radnabe 6 und Bremsscheibe 15 bilden eine vormontierbare Einheit, die nur noch mit den Schraubverbindungen 13 an den lenkbaren Radträger 1 angeschraubt wird.

### Bezugszeichenliste:

- 1: lenkbarer Radträger
- 2: drehender Innenring des Rollenlagers
- 3: Lagerrollen
- 4: feststehender Außenring des Rollenlagers
- 4': Gewinde
- 5: Radlager
- 6: Radnabe
- 7: Bremse
- 8: Lenkachse
- 9: Radachse
- 10: drehender Achszapfen
- 11: Befestigung
- 12: Schraubenverbindungen
- 13: Schraubenverbindungen
- 14: Zylinderteil
- 15: Bremsscheibe
- 16: Gewinde
- 17: Befestigungsflansch
- 18: Achskörper
- 19: Achsschenkelbolzen
- 20: Bördelung
- 21: Distanzring
- 22: feststehender Innenring
- 23: Lagerrollen
- 24: drehender Außenring
- 25: Radlager
- 26: Schraubenverbindung
- 27: Radträger
- 28: Befestigungsring der Bremsscheibe
- 29: Sicherungsmutter
- 30: feststehender Achszapfen
- 31: Bohrungen für Radschrauben
- 32: Schraubenverbindung
- 33: Montagestellen für Lenkhebel
- 34: Befestigungsstellen für Spurhebel
- 35: Zentrierung Welle/Bohrung
- 36: Durchgangsbohrungen
- 37: Befestigungsaugen

## Patentansprüche

1. Vorrichtung zur Lagerung eines gelenkten Fahrzeugrades mit
- einem am Fahrzeugaufbau um eine Lenkachse (8) lenkbaren Radträger (1);
- einem am Radträger (1) befestigten und ein Rollenlager (2, 3, 4) aufweisenden Radlager (5);
- einer Radnabe (6) zum Befestigen des Fahrzeugrades, welche mit dem Radlager (5) um eine Radachse (9) des Fahrzeugrades drehbar am Radträger (1) gelagert ist; und
- einem Achszapfen (10), welcher in einem Innenring (2) des Rollenlagers angeordnet und mit dem Innenring (2) drehfest verbunden ist;
**dadurch gekennzeichnet, dass**
- ein Außenring (4) des Radlagers (5) drehfest mit dem lenkbaren Radträger (1) verbunden ist;
- der Achszapfen (10) mittels des Rollenlagers (2, 3, 4) drehbar im Außenring (4) des Radlagers (5) gelagert ist; und
- mit dem Achszapfen (10) eine Befestigung (11) verbunden ist, an welcher die Radnabe (6) mittels Schraubenverbindungen (12) befestigbar ist.

2. Vorrichtung nach Anspruch 1, **dadurch gekennzeichnet, dass** der Außenring (4) des Radlagers (5) mit Schraubenverbindungen (13) mit dem lenkbaren Radträger (1) verbunden ist.

3. Vorrichtung nach Anspruch 1 oder 2, **dadurch gekennzeichnet, dass** der lenkbare Radträger (1) aus einem Gussteil oder Schmiedeteil besteht.

4. Vorrichtung nach einem der Ansprüche 1 bis 3, **dadurch gekennzeichnet, dass** der Befestigung (11) ein etwa parallel zum Achszapfen (10) verlaufendes Zylinderteil (14) aufweist, an welchem die Radnabe (6) mittels der Schraubenverbindungen (12) befestigbar ist.

5. Vorrichtung nach einem der Ansprüche 1 bis 4, **dadurch gekennzeichnet, dass** an der Befestigung (11) ferner eine Bremsscheibe (15) befestigbar ist.

6. Vorrichtung nach einem der Ansprüche 1 bis 5, **dadurch gekennzeichnet, dass** die Bremsscheibe (15) mit denselben Schraubenverbindungen (12) wie die Radnabe (6) an der Befestigung (11) befestigbar ist.

7. Vorrichtung nach einem der Ansprüche 1 bis 6, **dadurch gekennzeichnet, dass** an der Befestigung (11) ein ein Gewinde (16) für die Schraubenverbindungen (12) aufweisender Befestigungsflansch (17) vorgesehen ist.

8. Vorrichtung nach einem der Ansprüche 1 bis 7, **dadurch gekennzeichnet, dass** das Radlager (5), welches den Achszapfen (10) mit dem Befestigung (11) und das Rollenlager (2, 3, 4) aufweist, als vormontierte Baueinheit am lenkbaren Radträger (1) montierbar ist.

9. Vorrichtung nach einem der Ansprüche 1 bis 8, **dadurch gekennzeichnet, dass** das Radlager (5) mittels Achskräfte teilweise aufnehmenden Zentriermitteln (35) am Radträger (1) zentriert ist.
